# EUROPEAN PATENT SPECIFICATION

(11) **EP 3 630 351 B1**
(45) Date of publication and mention of the grant of the patent: **27.07.2022**
(21) Application number: 17911667.8
(22) Date of filing: 31.05.2017
(51) Int. Cl.: B01J 20/26, C08F 220/28, F24F 8/15, B01D 53/72, C08F 212/36, B01D 53/04, B01J 20/28, B01D 53/02, C08F 2/18, B01J 20/04

(54) **ACETOACETOXY OR ACETOACETAMIDE FUNCTIONAL POLYMERIC BEADS**
FUNKTIONELLE ACETOACETOXY- ODER ACETOACETAMID-POLYMERPERLEN
BILLES POLYMÈRES À FONCTION ACÉTOACÉTOXY OU ACÉTOACÉTAMIDE

(43) Date of publication of application: 08.04.2020
(73) Proprietor: DDP Specialty Electronic Materials US, LLC, Wilmington, DE 19805 (US)
(72) Inventor: ZHANG, Jiguang, Shanghai 201203 (CN); CHEN, Hongyu, Shanghai 201203 (CN); ZOU, Jian, Shanghai 201203 (CN); FENG, Shaoguang, Shanghai 201203 (CN); YAO, Wenbin, Shanghai 201203 (CN); LUO, Yan, Shanghai 201203 (CN)
(74) Representative: Houghton, Mark Phillip
(86) International application number: PCT/CN2017/086596
(87) International publication number: WO 2018/218501

(56) References cited:
- US-A- 5 830 414
- US-A1- 2004 082 707
- US-A1- 2004 082 707
- US-A1- 2008 134 893
- US-A1- 2008 135 058
- US-A1- 2013 052 113
- US-B2- 7 855 261

## Description

### FIELD OF THE INVENTION

The present invention relates to a process for preparing acetoacetoxy or acetoacetamide functional polymeric beads.

### INTRODUCTION

Aqueous dispersions of acetoacetoxy or acetoacetamide functional polymers have been known as aldehyde abatement materials in coating applications. However, hydrolysis of the acetoacetoxy or acetoacetamide functional groups in these polymers tend to occur in water during storage in containers, which causes an unsafe buildup of pressure resulting in safety concerns. Thus, acetoacetoxy or acetoacetamide functional polymers in the aqueous dispersions usually contain a low content of acetoacetoxy or acetoacetamide functional groups. For example, the content of acetoacetoxy or acetoacetamide functional monomers used for preparing the aqueous dispersions of acetoacetoxy or acetoacetamide functional polymers usually cannot be higher than 10% by weight of total monomers. To prohibit hydrolysis of acetoacetoxy or acetoacetamide functional polymers in aqueous dispersions while increasing the content of acetoacetoxy or acetoacetamide functional groups, such aqueous dispersions have to be further exposed to a drying process after emulsion polymerization thus to obtain polymer powders for storage, but the drying process involves additional facility costs. In addition, these polymer powders typically have a particle size of from 50 nanometers (nm) to 1 micrometer and may not be suitable for some applications where larger polymer particles are required.

Aldehyde abatement materials are also desirable in other applications, such as gas filter devices. Conventional gas filter devices such as air conditioners and air purifiers typically use activated carbon as a filter medium. There is always a need to further improve formaldehyde abatement capacity and formaldehyde abatement rate of these conventional gas filter devices.

US2008/134893A1 relates to a particulate filter media comprising an addition polymer prepared by emulsion or suspension polymerisation of AAEM. Said particulate filter media has been found to be especially effective in removing gaseous aldehydes present in gases such as air. It also discloses a method for the removal of formaldehyde from air which comprises contacting air containing formaldehyde with a gas filter device comprising a filter bed, filter cartridge or tobacco smoke filter containing as the filter medium the acetoacetate-functional polymer.

Therefore, it is desirable to develop novel polymers suitable for removing aldehydes, particularly gaseous aldehydes, which provide better aldehyde abatement properties than activated carbon but have limited impacts on existing processing facilities.

### SUMMARY OF THE INVENTION

The present invention provides a process for preparing novel polymeric beads having a specific surface area in a certain range, for example, from 80 to 400 m²/g, and comprising a specific acetoacetoxy or acetoacetamide functional polymer. The polymeric beads prepared by the process of the present invention surprisingly show improved formaldehyde abatement capacity and/or faster formaldehyde abatement rate than conventional aldehyde abatement materials such as activated carbon. The polymeric beads are useful to be used as a filter medium for gas filter devices.

In a first aspect, the present invention includes a process for preparing polymeric beads comprising a polymer, wherein the polymer comprises, based on the weight of the polymer,from 25% to 75% by weight of structural units of an acetoacetoxy or acetoacetamide functional monomer, and from 25% to 75% by weight of structural units of a polyvinyl monomer; and wherein the polymeric beads contain at least 5,000 µg/g of an alkali metal ion, and have a specific surface area in the range of from 80 to 400 m²/g, said process comprising, (i) suspension polymerization of monomers in the presence of a porogen, wherein the monomers comprise, based on the total weight of monomers,from 25% to 75% by weight of an acetoacetoxy or acetoacetamide functional monomer, and from 25% to 75% by weight of a polyvinyl monomer; and (ii) contacting the obtained polymer from step (i) with a base selected from the group consisting of an alkali metal hydroxide, an alkali metal carbonate, and an alkali metal bicarbonate to obtain the polymeric beads; and wherein the porogen is toluene.

In a second aspect, the present invention includes a gas filter device comprising the polymeric beads prepared by the process of the first aspect as a filter medium.

In a third aspect, the present invention includes a method of removing aldehydes from air containing aldehydes. The method comprises contacting the air with the polymeric beads prepared by the process of the first aspect.

### DETAILED DESCRIPTION OF THE INVENTION

"Acrylic" as used herein includes (meth)acrylic acid, (meth)alkyl acrylate, (meth)acrylamide, (meth)acrylonitrile and their modified forms such as (meth)hydroxyalkyl acrylate. Throughout this document, the word fragment "(meth)acryl" refers to both "methacryl" and "acryl". For example, (meth)acrylic acid refers to both methacrylic acid and acrylic acid, and methyl (meth)acrylate refers to both methyl methacrylate and methyl acrylate.

A "bead" is characterized by its average particle size of at least 20 micrometers (µm). The average particle size herein refers to the number average particle size determined by Beckman Coulter RapidVue optical microscopes.

The polymeric beads prepared by the process of the present invention comprise a polymer. The polymer useful in the present invention is a polymerization product of from 25% to 75% by weight of at least one acetoacetoxy or acetoacetamide functional monomer and from 25% to 75% by weight of at least one polyvinyl monomer, based on the total weight of monomers. The polymer comprises structural units of at least one acetoacetoxy or acetoacetamide functional monomer and structural units of at least one polyvinyl monomer. As used herein, the term structural units, also known as polymerized units, of the named monomer refers to the remnant of the monomer after polymerization. For example, a structural unit of methyl methacrylate is as illustrated: 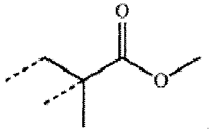 where the dotted lines represent the points of attachment of the structural unit to the polymer backbone.

The polymer useful in the present invention comprises structural units of one or more acetoacetoxy or acetoacetamide functional monomers. The acetoacetoxy or acetoacetamide functional monomers are monomers having one or more acetoacetyl functional groups represented by: 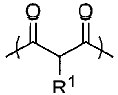 wherein R¹ is hydrogen, an alkyl having 1 to 10 carbon atoms, or phenyl.

Examples of suitable acetoacetoxy or acetoacetamide functional groups include 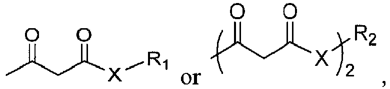 wherein X is O or N, R₁ is a divalent radical and R₂ is a trivalent radical, that attach the acetoacetoxy or acetoacetamide functional group to the backbone of the polymer. The acetoacetoxy or acetoacetamide functional monomers preferably have the following structures: 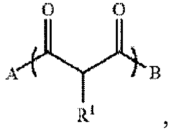 wherein A is either 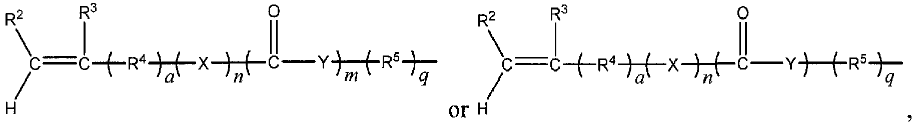 wherein R¹ is selected from H, alkyl having 1 to 10 carbon atoms, and phenyl; R² is selected from H, alkyl having 1 to 10 carbon atoms, phenyl, halo, CO₂CH₃, and CN; wherein R³ is selected from H, alkyl having 1 to 10 carbon atoms, phenyl, and halo; wherein R⁴ is selected from alkylene having 1 to 10 carbon atoms and phenylene; wherein R⁵ is selected from alkylene having 1 to 10 carbon atoms and phenylene; wherein a, m, n, and q are independently selected from 0 and 1; wherein each of X and Y is selected from -NH- and -O-; and B is selected from A, alkyl having 1 to 10 carbon atoms, phenyl, and heterocyclic groups.

The acetoacetoxy or acetoacetamide functional monomer useful for preparing the polymer can be an ethylenically unsaturated acetoacetoxy or acetoacetamide functional monomer, that is, a monomer having an ethylenic unsaturation and one or more acetoacetoxy or acetoacetamide functional group. Preferred acetoacetoxy or acetoacetamide functional monomers include acetoacetoxyalkyl (meth)acrylates such as acetoacetoxyethyl methacrylate (AAEM), acetoacetoxyethyl acrylate, acetoacetoxypropyl methacrylate, acetoacetoxybutyl methacrylate, and 2,3-di(acetoacetoxy)propyl methacrylate; allyl acetoacetate, acetoacetamides, and combinations thereof. The polymer may comprise, based on the weight of the polymer, 25% by weight or more, 30% by weight or more, 35% by weight or more, 40% by weight or more, 45% by weight or more, or even 50% by weight or more, and at the same time, 75% by weight or less, 70% by weight or less, 68% by weight or less, 65% by weight or less, 60% by weight or less, or even 55% by weight or less of structural units of the acetoacetoxy or acetoacetamide functional monomer.

The polymer useful in the process of the present invention may comprise structural units of one or more polyvinyl monomers. Polyvinyl monomers are monomers having two or more ethylenically unsaturated sites per molecule. The polyvinyl monomer is a crosslinker to form a crosslinked polymer. A crosslinked polymer as used herein refers to a polymer polymerized from monomers containing a polyvinyl monomer. The polyvinyl monomer can be a polyvinyl aromatic monomer, a polyvinyl aliphatic monomer, or mixtures thereof. Preferred polyvinyl monomers are one or more polyvinyl aromatic monomers or their combinations with one or more polyvinyl aliphatic monomers. Examples of suitable polyvinyl aromatic monomers include polyvinylbenzene monomers such as divinylbenzene and trivinyl benzene, divinylnaphthalene, or mixtures thereof. Preferred polyvinyl aromatic monomers include divinylbenzene. Mixtures of polyvinylbenzene monomers can be employed. Examples of suitable polyvinyl aliphatic monomers include allyl methacrylate, tripropylene glycol dimethacrylate, diethylene glycol dimethacrylate, ethylene glycol dimethacrylate, 1,6-hexanediol dimethacrylate, 1,3-butylene glycol dimethacrylate, polyalkylene glycol dimethacrylate, diallyl phthalate, trimethylolpropane trimethacrylate, or mixtures thereof. The polymer may comprise, based on the weight of the polymer, 25% by weight or more, 30% by weight or more, 35% by weight or more, 40% by weight or more, 45% by weight or more, or even 50% by weight or more, and at the same time, 75% by weight or less, 70% by weight or less, 68% by weight or less, 65% by weight or less, 60% by weight or less, or even 55% by weight or less of structural units of the polyvinyl monomer.

The polymer useful in the process of the present invention may also comprise structural units of one or more monovinyl aromatic monomers. The monovinyl aromatic monomers may include styrene, α-substituted styrene such as methyl styrene, ethyl styrene, t-butyl styrene, and bromo styrene, vinyltoluenes, ethyl vinylbenzenes, vinylnaphthalenes, and heterocyclic monomers such as vinylpyridine and 1-vinylimidazole, or mixtures thereof. Preferred monovinyl aromatic monomers include styrene and ethyl vinylbenzene, and more preferably styrene. Mixtures of monovinyl aromatic monomers can be employed. The polymer may comprise, by weight based on the weight of the polymer, from 0 to 50% of structural units of the monovinyl aromatic monomer, for example, 30% or less, 20% or less, or even 5% or less of structural units of the monovinyl aromatic monomer.

The polymer useful in the process of the present invention may also include structural units of one or more monovinyl aliphatic monomers. Said monovinyl aliphatic monomers expressly exclude the acetoacetoxy or acetoacetamide functional monomer described above. The monovinyl aliphatic monomer may include esters of (meth)acrylic acids, esters of itaconic acid, esters of maleic acid, (meth)acrylonitrile, and α, β-ethylenically unsaturated carboxylic acids and/or their anhydrides, or mixtures thereof. Suitable α, β-ethylenically unsaturated carboxylic acids and/or their anhydrides may include (meth)acrylic anhydride, maleic anhydride, acrylamido-2-methylpropanesulfonic acid (AMPS), acrylic acid, methyl acrylic acid, crotonic acid, acyloxypropionic acid, maleic acid, fumaric acid, itaconic acid, or mixtures thereof. The (meth)acrylic ester monomers can be C₁-C₁₈, C₄-C₁₂, or C₈-C₁₀ (meth)acrylic ester monomers including, for example, methyl acrylate, ethyl acrylate, butyl acrylate, 2-ethylhexyl acrylate, decyl acrylate, lauryl acrylate, methyl methacrylate, butyl methacrylate, isodecyl methacrylate, and lauryl methacrylate, or mixtures thereof. Preferred monovinyl aliphatic monomers include methyl methacrylate, acrylonitrile, ethyl acrylate, 2-hyroxyethyl methacrylate, or mixtures thereof. The polymer may comprise, by weight based on the weight of the polymer, from 0 to 40% of the monovinyl aliphatic monomer, for example, less than 30%, less than 20%, less than 10%, less than 5%, or less than 1% of structural units of the monovinyl aliphatic monomer. The polymer is preferably substantially free of structural units of the monovinyl aliphatic monomer.

In some embodiments, the polymer useful in the process of the present invention comprises, by
weight based on the weight of the polymer,
from 30% to 70% of structural units of the acetoacetoxy or acetoacetamide functional monomer,
from 70% to 30% of structural units of the polyvinyl monomer, and optionally
from 0 to 20% of structural units of the monovinyl aromatic monomer and/or the monovinyl aliphatic monomer.

In a preferred embodiment, the polymer useful in the process of the present invention comprises, by weight based on the weight of the polymer, from 45% to 65% of structural units of the acetoacetoxy or acetoacetamide functional monomer, from 35% to 55% of structural units of the polyvinyl monomer, and optionally from 0 to 20% of structural units of the monovinyl aromatic monomer and/or the monovinyl aliphatic monomer.

In other embodiments, the polymer comprises structural units of the acetoacetoxy or acetoacetamide functional monomer and the rest being the polyvinyl monomer. Preferably, the polymer comprises, by weight based on the weight of the polymer, from 25% to 75%, from 30% to 70%, or from 45% to 65% of structural units of the acetoacetoxy or acetoacetamide functional monomer, and the rest being the structural units of the polyvinyl aromatic monomer.

The process for preparing the polymeric beads of the present invention comprises (i) suspension polymerization of the acetoacetoxy or acetoacetamide functional monomer and the polyvinyl aromatic monomer, and optionally the monovinyl aromatic monomer and/or the monovinyl aliphatic monomers described above in the presence of a porogen, and (ii) contacting the obtained polymer from step (i) with a base selected from the group consisting of an alkali metal hydroxide, an alkali metal carbonate, and an alkali metal bicarbonate to obtain the polymeric beads. The polymer useful in the present invention is prepared by suspension polymerization of the monomers described above. The polymer comprises the monomers in polymerized form, that is, structural units of the monomers comprising the acetoacetoxy or acetoacetamide functional monomer, the polyvinyl aromatic monomer, and optionally the monovinyl aromatic monomer and/or the monovinyl aliphatic monomer. Total weight concentration of the monomers used for preparing the polymer is equal to 100%. Weight concentration of each monomer in the monomers for preparing the polymer is substantially the same as that of the structural units of such monomer in the polymer. For example, monomers used for preparing the polymer comprise, based on the total weight of monomers, from 25% to 75% by weight of an acetoacetoxy or acetoacetamide functional monomer, and from 25% to 75% by weight of a polyvinyl monomer.

The suspension polymerization may be conducted in the presence of more than one porogens. The suspension polymerization is typically conducted by forming a suspension of monomers within an agitated, continuous suspending medium in the presence of one or more porogens, followed by polymerization of the monomers described above for forming the polymer, that is, the polymerization product of these monomers. Porogens are inert solvents that are suitable for forming pores and/or displacing polymer chains during polymerization. A porogen is one that dissolves the monomers being polymerized but does not dissolve the polymer obtained therefrom. Examples of such porogens include aliphatic hydrocarbon compounds such as heptane and octane, aromatic compounds such as benzene, toluene, and xylene, halogenated hydrocarbon compounds such as dichloroethane and chlorobenzene, and linear polymer compounds such as polystyrene. These compounds may be used alone or as a mixture of two or more thereof. In the present invention, the porogens is toluene. The amount of the porogen used in the process of the present invention may be from 30 to 400 parts by weight, from 100 to 300 parts by weight, or from 200 to 280 parts by weight, per 100 parts by weight of the total monomers for preparing the polymer.

Suspension polymerization process is well known to those skilled in the art and may comprise suspending droplets of the monomers and of the porogen in a medium in which neither are soluble. This may be accomplished by adding the monomers and the porogen with other additives to the suspending medium (preferably, water) which contains a stabilizer. The monomers may be first mixed with the porogen and other additions (e.g., a free radical initiator) to form an oil phase, and then the oil phase may be added into a water phase. The water phase may comprise a stabilizer, and optionally, an inorganic salt such as sodium chloride, potassium chloride, and sodium sulphate; an inhibitor such as 2,2,6,6-tetramethylpiperidin-1-oxyl ("TEMPO"), 4-hydroxy-2,2,6,6-tetramethylpiperidin-1-oxyl ("4-Hydroxy-TEMPO"); or mixtures thereof. The monomers can be suspended as droplets often of diameter from 1 µm to 2,000 µm in water. The suspension polymerization may be conducted under nitrogen (N₂) atmosphere. The suspension polymerization is typically conducted under agitation at a speed of from 5 to 1,000 revolutions per minute (rpm), from 20 to 600 rpm, or from 50 to 300 rpm. Temperature suitable for suspension polymerization may be in the range of from 20°C to 99°C or in the range of from 60°C to 90°C. Time duration for suspension polymerization may be in the range of from 1 to 30 hours, or in the range of from 3 to 20 hours.

The stabilizers useful in suspension polymerization are compounds useful for preventing agglomeration of monomer droplets. Examples of suitable stabilizers include polyvinyl alcohol (PVA), polyacrylic acid, polyvinyl pyrrolidone, polyalkylene oxide such as polyethylene glycol, gelatin, a cellulosic such as hydroxyethyl cellulose , methyl cellulose, carboxymethyl methyl cellulose, and hydroxypropyl methylcellulose (HPMC), poly(diallyldimethylammonium chloride) (PDMAC), or mixtures thereof. Preferred suspension stabilizers include polyvinyl alcohol, gelatin, poly(diallyldimethylammonium chloride), or mixtures thereof. The stabilizer may be added in one shot or in at least two additions. The stabilizer may be used in an amount of from 0.01% to 3% by weight or from 0.1% to 2% by weight, based on the total weight of the monomers.

The suspension polymerization process may be conducted in the presence of a free radical initiator to initiate the polymerization. Examples of suitable free radical initiators include organic peroxides such as benzoyl peroxide, lauroyl peroxide and dioctanoyl peroxide, organic azo compounds including azobisisobutyronitrile such as 2,2'-azobisisobutyronitrile and 2,2'-azobis(2,4-dimethylvaleronitrile), or mixtures thereof. Preferred free radical initiators include benzoyl peroxide, lauroyl peroxide, or mixtures thereof. The free radical initiators may be used typically at a level of from 0.01% to 5% by weight or from 0.1% to 2% by weight, based on the total weight of the monomers for preparing the polymer. After completion of suspension polymerization, the obtained polymer, typically in the shape of beads, may be isolated by filtration.

The process for preparing the polymeric beads comprises (ii) contacting the polymer obtained from suspension polymerization (i.e., step (i)) with a base selected from the group consisting of an alkali metal hydroxide, an alkali metal carbonate, and an alkali metal bicarbonate. Mixtures of one or more of the above bases may be used. "Alkali metal" herein includes potassium and sodium. Examples of suitable bases include potassium hydroxide, sodium hydroxide, potassium carbonate, sodium carbonate, potassium bicarbonate, sodium bicarbonate, or mixtures thereof. Preferred bases are alkali metal hydroxides, and more preferably potassium hydroxide. The polymeric beads prepared by the process of the present invention may comprise more than one alkali metal ions, preferably potassium ions, in an amount of at least 5,000 µg per gram of the polymeric bead (ng/g), for example, 6,000 µg/g or more, 7,000 µg/g or more, 8,000 µg/g or more, 9,000 µg/g or more, 10,000 µg/g or more, 12,000 µg/g or more, 15,000 µg/g or more, 16,000 µg/g or more, 17,000 µg/g or more, 18,000 µg/g or more, or even 20,000 µg/g or more. The polymeric beads may comprise more than one alkali metal ions in an amount of 100,000 µg/g or less, 80,000 µg/g or less, 70,000 µg/g or less, 60,000 µg/g or less, 50,000 µg/g or less, or even 40,000 µg/g or less. The content of alkali metal ions in the polymeric beads may be measured by Inductively Coupled Plasma (ICP) according to the test method described in the Examples section below.

The polymeric beads prepared by the process of the present invention may have a number average particle size of 20 µm or more, 50 µm or more, 80 µm or more, 90 µm or more, 100 µm or more, 120 µm or more, 140 µm or more, 150 µm or more, 160 µm or more, or even 200 µm or more. The number average particle size of the polymeric beads may be 2,000 µm or less, 1,800 µm or less, 1,500 µm or less, 1,200 µm or less, 1,000 µm or less, 800 µm or less, 700 µm or less, or even 600 µm or less. The number average particle size of the polymeric bead can be determined by Beckman Coulter RapidVue optical microscopes. The polymeric beads may be further processed and/or treated into various shapes.

The polymeric beads prepared by the process of the present invention may be porous crosslinked polymeric beads. The polymeric beads have a specific surface area of 80 m²/g or more, 85 m²/g or more, 90 m²/g or more, 100 m²/g or more, 110 m²/g or more, 120 m²/g or more, 130 m²/g or more, or even 150 m²/g or more. The polymeric bead have a specific surface area of 400 m²/g or less, 380 m²/g or less, 350 m²/g or less, 340 m²/g or less, 300 m²/g or less, 250 m²/g or less, or even 200 m²/g or less. Values of the specific surface area per unit weight of polymeric beads (m² per gram of the polymeric beads) were determined by the nitrogen adsorption method in which dried and degassed samples were analyzed on an automatic volumetric sorption analyzer. The instrument works on the principle of measuring the volume of gaseous nitrogen adsorbed by a sample at a given nitrogen partial pressure. The volumes of gas adsorbed at various pressures are used in the BET (Brunauer-Emmett-Teller) model for calculation of the surface area of the sample.

The present invention relates to a method of removing aldehydes from air containing aldehydes, comprising contacting the air with the polymeric beads prepared by the process of the present invention.

The polymeric beads cause aldehyde abatement (i.e., reduction). Examples of aldehydes include formaldehyde, acetaldehyde, acrolein, propionaldehyde, or mixtures thereof. The reaction of the acetoacetoxy or acetoacetamide functional group in the polymeric beads with aldehydes is irreversible (i.e., a chemical reaction) as compared to physically absorption of aldehydes for those conventional absorbers such as activated carbon. The polymeric beads can provide higher formaldehyde abatement capacity and/or higher formaldehyde abatement rate than activated carbon. The formaldehyde abatement capacity and formaldehyde abatement rate are measured according the test methods described in the Examples section below. Preferably, the polymeric beads can provide both higher formaldehyde abatement capacity and higher formaldehyde abatement rate than activated carbon.

The polymeric beads prepared by the process of the present invention are useful in various applications for the removal of aldehydes including, for example, elastomers, plastics, adhesives, filter tips of cigarettes, air conditioners, and air purifiers. The polymeric beads can be used as a filter medium useful for the removal of a gaseous aldehyde from a gas such as air. Gaseous aldehydes may include formaldehyde, acetaldehyde, acrolein, propionaldehyde, or mixtures thereof. The polymeric beads of the present invention may be used in combination with activated carbon.

The present invention also relates to a gas filter device comprising the polymeric beads as a filter medium. The gas filter device may include, for example, filter beds, filter cartridges, and tobacco smoke filters. The gas filter device can be used in various applications such as air purifiers such as in-car air purifiers and household air purifier, and air conditioners.

### EXAMPLES

Some embodiments of the invention will now be described in the following Examples, wherein all parts and percentages are by weight unless otherwise specified.

Acetoacetoxyethyl methacrylate (AAEM) is available from Eastman Chemical.

Divinyl benzene (DVB), available from The Dow Chemical Company, is used as a crosslinker.

Toluene and decanol are used as porogens.

Poly(diallyldimethylammonium chloride) (PDMAC) (15% by weight aqueous solution) and gelatin, both available from The Dow Chemical Company, are used as stabilizers.

Lauroyl peroxide (LPO), available from The Dow Chemical Company, is used as an initiator.

Activated carbon (AC) having a specific surface area of 458 m²/g, available from Jiangsu Lettall Electronics Co., Ltd., has a rod-like shape with 1 millimeter (mm) in diameter and 1-3 mm in length.

The following standard analytical equipment and methods are used in the Examples.

### Particle Size

The particle size of polymeric beads was determined by a Beckman Coulter RapidVue optical microscope. The particle size was determined by averaging over 1,500 polymeric beads and the number average particle size was recorded.

### Specific Surface Area (BET method)

Specific surface areas of polymeric beads and activated carbon were determined by nitrogen (N₂) adsorption-desorption isotherms on a Micrometric ASAP 2010 apparatus. Samples were dried at 50 °C overnight prior to adsorption studies. The volume of gas adsorbed to the surface of the polymeric beads was measured at the boiling point of nitrogen (-196°C). The amount of adsorbed gas was correlated to the total surface area of the polymeric beads including pores on the surface. Specific surface area calculations were carried out using the BET method.

### Formaldehyde Abatement Rate Test

The test of formaldehyde abatement rate of a sample was conducted in a mini-chamber system where formaldehyde was circulated in the system and passed through a sample cartridge. During the test, the formaldehyde concentration decreased gradually with testing time as formaldehyde was consumed by the sample. Detailed testing procedure was as follows:
A 4 liter glass chamber (available from Shanghai Hongjing instrument Co., Ltd.) was used for the test and a plastic tube was connected to the outlet of the chamber. A formaldehyde detector (GT903-CH₂O available from Keernuo Co., Ltd., Shenzhen, China; formaldehyde detecting range: 0.01 mg/m³-13.4 mg/m³), a sample cartridge, an air pump, and a micro-flow controller were connected in sequence using plastic tubes, and finally connected to the inlet of the chamber to form a cycling mini-chamber system.

At the beginning of the test, an aliquot of a formaldehyde solution (about 400 ppm formaldehyde in an acetonitrile (ACN)/water mixture) was injected into the glass chamber directly. Then the air pump started to circulate air inside the system at a flow rate of 500 mL/min to allow formaldehyde to equilibrate in the mini-chamber system. The initial formaldehyde concentration in the mini-chamber system was about 0.9 mg/m³ (milligram formaldehyde per cubic meter of air). Then a test sample was put in the sample cartridge quickly and formaldehyde-containing air was circulated in the system at a constant flow rate (500 mL/min). Formaldehyde concentrations at different time points were recorded using the formaldehyde detector. Results were presented as percentage of formaldehyde consumed in the mini-chamber system as function of testing time. The higher the value at the same time point, the faster the formaldehyde abatement rate of the sample.

### Formaldehyde Abatement Capacity Test

The formaldehyde abatement capacity test was conducted by continuously feeding formaldehyde to a sample cartridge and real-time monitoring of formaldehyde concentrations at the outlet of the sample cartridge. The less formaldehyde passed through the sample cartridge (i.e., the lower formaldehyde concentration at the outlet of the sample cartridge) for the same time period, the better formaldehyde abatement capacity of the sample. Detailed testing procedure was as follows:

An air pump (KDY-F air pump available from Jiang Su Keyuan instrument Co., Ltd., China) was connected to a 3-way connector via a plastic tube. The other two ends of the 3-way connector were connected to a syringe pump (RSP04-A available from Ristron Co., Ltd.) for injecting a formaldehyde solution (about 400 ppm formaldehyde in an ACN/water mixture), and a micro-flow controller (21-1-00-0-1000--KM9015 available from Alicat Co., Ltd.), respectively. The flow rate of the micro-flow controller was set at 500 mL/min. The micro-flow controller was further connected to the inlet of a 3 mL sample cartridge (available from Jingrong Electrical Materials Co., Ltd., Jiangsu, China). The outlet of the sample cartridge was connected to a formaldehyde detector (GT903-CH₂O formaldehyde detector from Keernuo Co., Ltd., formaldehyde detecting range: 0.01-13.4 mg/m³). The syringe pump speed was set at an appropriate value to ensure the formaldehyde concentration in the air flow at the inlet of the sample cartridge at about 0.25 mg/m³ as measured by the formaldehyde detector.

A test sample was put into the 3 mL sample cartridge. A frit (SBEQ-CR03PE available from Anpel Co., Ltd., China.) was installed at the bottom of the cartridge to avoid sample leakage from the cartridge. The outlet of the sample cartridge was connected to the formaldehyde detector to monitor the concentration of formaldehyde passed through the sample cartridge. During the test, the formaldehyde concentration (mg/m³) in the air flow at the outlet of the sample cartridge was recorded periodically. The less formaldehyde passed through the sample cartridge (i.e., the lower formaldehyde concentration at the outlet of the sample cartridge) for the same time period, the better formaldehyde abatement capacity of the sample.

### Measurement of Alkali Metal Ion Content

The alkali metal ion (e.g., K⁺ or Na⁺) content was determined by Inductively Coupled Plasma (ICP). About 0.5 g of a sample, to nearest 0.0001 g, was weighed into a polypropylene (PP) tube. Then 50 g of deionized (DI) water, to nearest 0.0001 g, was added into the tube. The resultant sample solution was shaken for 30 minutes. 0.1 ml of the sample solution after filtration was taken out and diluted with DI water to 10 ml solution, and then measured with ICP. Standard alkali metal (e.g., potassium or sodium) solutions in water at concentrations of 0, 1, 2, 4, 10 mg/L, respectively, were prepared. Instrument conditions were as follows:
Spectrometer - Perkin Elmer Optima 5300DV (Radio Frequency (RF) power: 1.3 Kw; Gas flows: Plasma gas -15 L/min Auxiliary gas - 0.2 L/min, Nebulizer gas - 0.80 L/min; Sample delivery - Pump, flow rate: 1.50 ml/min; View distance - 15.0 millimeter; Plasma view - Axial; Wavelength for K⁺ measurement - 766.49 nm, and wavelength for Na⁺ measurement - 589.59 nm).

### Examples (Exs) 1-5

Exs 1-5 were conducted based on oil phase and water phase compositions given in Table 1. A 2L, three neck reactor equipped with a condenser, a mechanical stirrer and an inlet for N₂ was fed with a water phase composition comprising DI water, PDMAC and gelatin. The resultant water phase was heated to 95°C under a gentle N₂ flow until gelatin was completely dissolved.

In a separate container, an oil phase was prepared by mixing monomers (AAEM and DVB), LPO, and a porogen, based on formulations given in Table 1. Agitation was applied to completely dissolve LPO. Then the oil phase was added into the water phase under mild agitation. The system was then cooled down to 75°C. The reaction proceeded for 15 hours at 75°C and further cooked for an hour at 107°C (oil bath temperature). After that, the system was cooled down to room temperature (20-25°C). Solid beads were collected via filtration. The beads were then washed with methanol (MeOH) (3 times of volume of beads) for three times, then immersed in potassium hydroxide (KOH) solution (10% by weight KOH in MeOH, 3 times of volume of beads), and then were washed with DI water (3 times of volume of beads). The obtained polymeric beads were then dried at 45°C overnight to reach a constant weight.

### Comparative (Comp) Ex A

Comp Ex A was conducted according to the same procedure as Ex 1, except different oil phase and water phase compositions as given in Table 1 were used. The obtained polymer included, based on the weight of the polymer, 20% by weight of structural units of AAEM.

### Comp Ex B

Comp Ex B was conducted according to the same procedure and formulations as Ex 2, except that the solid beads collected via filtration were washed with MeOH (3 times of volume of beads) for three times and then were washed with DI water (3 times of volume of beads), that is, the KOH treatment step was omitted.

### Comp Ex C

Comp Ex C was conducted according to the same procedure as Ex 1, except different oil phase and water phase compositions as given in Table 1 were used. The obtained polymer included, based on the weight of the polymer, 80% by weight of structural units of AAEM.

### Comp Ex D

Activated carbon was evaluated for formaldehyde (FA) abatement rate and abatement capacity.

### Comp Ex E

Comp Ex E was conducted according to the same procedure as described in Ex 1, except that the composition used for preparing the oil phase included 90 g of AAEM, 60 g of DVB, 80 g of decanol, and 1.6 g of LPO; and the composition used for preparing the water phase included 1,400 g of DI water, 35 g of PDMAC, and 1.6 g of gelatin.

Properties of the above obtained polymeric beads were evaluated according to the test methods described above and results are given in Table 2.

**Table 1. Compositions for Preparing Polymeric Beads**

| | Oil phase composition, gram | | | | Water phase composition, gram | | |
|---|---|---|---|---|---|---|---|
| | AAEM | DVB | Toluene | LPO | DI water | PDMAC | Gelatin |
| Ex 1 | 112 | 48 | 200 | 1.6 | 1400 | 35 | 1.6 |
| Ex 2 | 90 | 60 | 200 | 1.6 | 1400 | 35 | 1.6 |
| Ex 3 | 75 | 80 | 200 | 1.6 | 1400 | 35 | 1.6 |
| Ex 4 | 62 | 93 | 200 | 1.6 | 1400 | 35 | 1.6 |
| Ex 5 | 46 | 108 | 200 | 1.6 | 1400 | 35 | 1.6 |
| Comp Ex A | 15 | 60 | 120 | 0.72 | 1000 | 25 | 0.9 |
| Comp Ex B^{∗} | 90 | 60 | 200 | 1.6 | 1400 | 35 | 1.6 |
| Comp Ex C | 148 | 37 | 230 | 1.9 | 1400 | 35 | 1.6 |

| | | | | | | | |
|---|---|---|---|---|---|---|---|
| ^{∗}*No KOH treatment* | | | | | | | |

**Table 2. Properties of Polymeric Beads**

| | AAEM content^{∗} | Specific surface area (m²/g) | K⁺ content (± standard derivation) (µg/g) | Particle size (µm)^{∗∗} |
|---|---|---|---|---|
| Ex 1 | 70% AAEM | 85.8 | 62287 ±3894 | 211.0 |
| Ex 2 | 60% AAEM | 92 | 18896 ±126 | 345.8 |
| Ex 3 | 48% AAEM | 187 | 31674 ±1504 | 177.5 |
| Ex 4 | 40% AAEM | 248 | 31919±193 | 183.3 |
| Ex 5 | 30% AAEM | 329 | 21147±1593 | 315.9 |
| Comp Ex A | 20% AAEM | 416 | 23633±245 | 293.9 |
| Comp Ex B | 60% AAEM | 116 | 2150±67 | - |
| Comp Ex C | 80% AAEM | 50.4 | 75833±2301 | 239.0 |
| Comp Ex E | 60%AAEM | 75.9 | 3183±80 | 300.5 |

| | | | | |
|---|---|---|---|---|
| ^{∗∗}*AAEM content refers to the content of structural units of AAEM, by weight based on the weight the polymer in the polymeric beads;* ^{∗∗}*Number average particle size measured by a Beckman Coulter RapidVue optical microscope.* | | | | |

Table 3 gives formaldehyde abatement capacities for different samples. As shown in Table 3, the polymeric beads of Ex 2 kept the concentration of formaldehyde passed through the sample cartridge at nearly zero during the whole testing. In contrast, for Comp Exs A, C and D, the formaldehyde concentrations decreased to a certain value (e.g., 0.06 mg/m³ for Comp Exs A and C and 0.11 mg/m³ for Comp Ex D) at the first 50 minutes but later kept constant or even increased. The results indicate that the polymeric beads of Ex 2 had higher formaldehyde abatement capacity than that of Comp Ex A, C or D.

**Table 3. Formaldehyde Abatement Capacity**

| | Concentration of FA passed through the sample cartridge (mg/m³)^{∗} | | | |
|---|---|---|---|---|
| Time (min) | Comp Ex A | Ex 2 | Comp Ex C | Comp Ex D |
| | 0.22 | 0.24 | 0.30 | 0.25 |
| 50 | 0.06 | 0.00 | 0.06 | 0.11 |
| 100 | 0.07 | 0.00 | 0.06 | 0.11 |
| 150 | 0.08 | 0.00 | 0.08 | 0.11 |
| 200 | 0.09 | 0.00 | 0.07 | 0.12 |
| 250 | 0.10 | 0.00 | 0.07 | 0.14 |
| 300 | 0.11 | 0.00 | 0.08 | 0.14 |
| 350 | 0.11 | 0.00 | 0.07 | 0.14 |
| 400 | 0.12 | 0.00 | 0.07 | 0.15 |
| 450 | 0.13 | 0.00 | 0.07 | 0.17 |
| 500 | 0.13 | 0.00 | 0.06 | 0.15 |
| 550 | 0.14 | 0.00 | 0.08 | 0.13 |
| 600 | 0.14 | 0.01 | 0.07 | 0.12 |
| 650 | 0.15 | 0.01 | 0.07 | 0.13 |
| 700 | 0.15 | 0.01 | 0.07 | 0.14 |
| 750 | 0.15 | 0.01 | 0.07 | 0.12 |
| 800 | 0.15 | 0.00 | 0.06 | 0.11 |
| 850 | 0.17 | 0.00 | 0.08 | 0.12 |

| | | | | |
|---|---|---|---|---|
| ^{∗}*Sample weight: 170 mg (or 0.32 cm³) for Ex 2, Comp Ex A and Comp Ex C, respectively, and 177 mg (or 0.32 cm³) for Comp Ex D.* | | | | |

Table 4 gives formaldehyde abatement rates for different samples. As shown in Table 4, the polymeric beads of Exs 1-5 all showed higher formaldehyde abatement rate than the polymeric beads of Comp Exs A, B and E, and activated carbon of Comp Ex D. Particularly, the polymeric beads of Exs 1-3 comprising 70%, 60% and 48%, respectively, of structural units of AAEM showed even higher formaldehyde abatement rates than that of Ex 4 or Ex 5. The polymeric beads of Ex 3 demonstrated the highest formaldehyde abatement rate.

**Table 4. Formaldehyde Abatement Rate Properties**

| Time, (min) | Percentage of FA consumed in the mini-chamber system by time (%)^{∗} | | | | | | | | |
|---|---|---|---|---|---|---|---|---|---|
| | Ex 1 | Ex 2 | Ex 3 | Ex 4 | Ex 5 | Comp Ex A | Comp Ex B | Comp Ex D | Comp Ex E |
| | 0.00 | 0.00 | 0.00 | 0.00 | 0.00 | 0.00 | 0.00 | 0.00 | 0.00 |
| 1 | 7.95 | 6.90 | 4.60 | 4.60 | 6.90 | 5.88 | 0.00 | 1.12 | 2.30 |
| 2 | 13.64 | 16.09 | 11.49 | 8.05 | 13.79 | 10.59 | 1.12 | 4.49 | 2.30 |
| 3 | 20.45 | 25.29 | 16.09 | 11.49 | 19.54 | 15.29 | 2.25 | 5.62 | 3.45 |
| 4 | 26.14 | 34.48 | 20.69 | 16.09 | 21.84 | 20.00 | 2.25 | 10.11 | 3.45 |
| 5 | 31.82 | 43.68 | 25.29 | 19.54 | 25.29 | 23.53 | 2.25 | 11.24 | 4.60 |
| 6 | 38.64 | 49.43 | 29.89 | 24.14 | 28.74 | 28.24 | 4.49 | 14.61 | 4.60 |
| 7 | 43.18 | 56.32 | 34.48 | 25.29 | 29.89 | 29.41 | 5.62 | 15.73 | 6.90 |
| 8 | 48.86 | 58.62 | 40.23 | 29.89 | 31.03 | 32.94 | 5.62 | 19.10 | 8.05 |
| 9 | 53.41 | 62.07 | 44.83 | 34.48 | 35.63 | 36.47 | 6.74 | 21.35 | 8.05 |
| 10 | 57.95 | 66.67 | 52.87 | 39.08 | 37.93 | 37.65 | 6.74 | 22.47 | 9.20 |
| 15 | 76.14 | 77.01 | 72.41 | 52.87 | 48.28 | 48.24 | 10.11 | 31.46 | 12.64 |
| 20 | 82.95 | 85.06 | 83.91 | 63.22 | 60.92 | 56.47 | 15.73 | 39.33 | 16.09 |
| 25 | 85.23 | 89.66 | 90.80 | 71.26 | 71.26 | 64.71 | 21.35 | 46.07 | 19.54 |
| 30 | 89.77 | 93.10 | 94.25 | 77.01 | 79.31 | 69.41 | 25.84 | 52.81 | 21.84 |
| 35 | 94.32 | 95.40 | 98.85 | 81.61 | 83.91 | 74.12 | 28.09 | 58.43 | 25.29 |
| 40 | 95.45 | 97.70 | 100.00 | 86.21 | 88.51 | 76.47 | 32.58 | 62.92 | 26.44 |
| 45 | 98.86 | 98.85 | | 89.66 | 90.80 | 80.00 | 35.96 | 67.42 | 29.89 |
| 50 | 98.86 | 100.00 | | 93.10 | 93.10 | 81.18 | 39.33 | 70.79 | 33.33 |
| 55 | 100.00 | | | 94.25 | 95.40 | 84.71 | 41.57 | 73.03 | 34.48 |
| 60 | | | | 95.40 | 97.70 | 85.88 | 44.94 | 76.40 | 37.93 |

| | | | | | | | | | |
|---|---|---|---|---|---|---|---|---|---|
| ^{∗} *50 mg of sample put in a 3 mL sample cartridge for testing* | | | | | | | | | |

## Claims

1. A process for preparing polymeric beads comprising a polymer, wherein the polymer comprises, based on the weight of the polymer,
from 25% to 75% by weight of structural units of an acetoacetoxy or acetoacetamide functional monomer, and
from 25% to 75% by weight of structural units of a polyvinyl monomer; and
wherein the polymeric beads contain at least 5,000 µg/g of an alkali metal ion, measured by Inductively Coupled Plasma (ICP), and
have a specific surface area in the range of from 80 to 400 m²/g determined by the nitrogen adsorption method in which dried and degassed samples were analyzed on an automatic volumetric sorption analyser,
said process comprising,
(i) suspension polymerization of monomers in the presence of a porogen, wherein the monomers comprise, based on the total weight of monomers,
from 25% to 75% by weight of an acetoacetoxy or acetoacetamide functional monomer, and
from 25% to 75% by weight of a polyvinyl monomer; and
(ii) contacting the obtained polymer from step (i) with a base selected from the group consisting of an alkali metal hydroxide, an alkali metal carbonate, and an alkali metal bicarbonate to obtain the polymeric beads;
and wherein the porogen is toluene.

2. The process of claim 1, wherein the acetoacetoxy or acetoacetamide functional monomer is selected from the group consisting of acetoacetoxyethyl methacrylate, acetoacetoxyethyl acrylate, acetoacetoxypropyl methacrylate, allyl acetoacetate, acetoacetoxybutyl methacrylate, and 2,3-di(acetoacetoxy)propyl methacrylate.

3. The process of claim 1, wherein the polyvinyl monomer comprises a polyvinyl aromatic monomer selected from the group consisting of divinylbenzene, trivinyl benzene, and divinylnaphthalene.

4. The process of claim 1, wherein the polymer comprises, based on the weight of the polymer, from 30% to 70% by weight of structural units of the acetoacetoxy or acetoacetamide functional monomer, from 30% to 70% by weight of structural units of the polyvinyl monomer, and from 0 to 20% by weight of structural units of a monovinyl aliphatic monomer and/or a monovinyl aromatic monomer.

5. A gas filter device comprising polymeric beads prepared by a process of any one of claims 1-4 as a filter medium.

6. A method of removing aldehydes from air containing aldehydes, comprising contacting the air with polymeric beads prepared by a process of any one of claims 1-4.

## Patentansprüche

1. Verfahren für die Herstellung von Polymerperlen umfassend ein Polymer, wobei das Polymer Folgendes, auf das Gewicht des Polymers bezogen, umfasst,
25 bis 75 Gew.-% strukturelle Einheiten eines funktionellen Acetoacetoxy- oder Acetoacetamidmonomers und
25 bis 75 Gew.-% strukturelle Einheiten eines Polyvinylmonomers; und
wobei die Polymerperlen mindestens 5.000 µg/g eines Alkalimetallions, durch induktiv gekoppelte Plasma (ICP) gemessen, enthalten und
einen spezifischen Oberflächenbereich im Bereich von 80 bis 400 m²/g, durch das Stickstoffabsorptionsverfahren bestimmt, aufweisen, wobei getrocknete und entgaste Proben auf einem automatischen volumetrischen Sorptionsanalysator analysiert worden sind,
wobei das Verfahren Folgendes umfasst
(i) eine Suspensionspolymerisation von Monomeren in Gegenwart eines Porogens, wobei die Monomere Folgendes, auf das Gesamtgewicht der Monomere bezogen, umfassen
25 bis 75 Gew.-% eines funktionellen Acetoacetoxy- oder Acetoacetamidmonomers und
25 bis 75 Gew.-% eines Polyvinylmonomers; und
(ii) Kontaktieren des erhaltenen Polymers aus Schritt (i) mit einer Base ausgewählt aus der Gruppe bestehend aus einem Alkalimetallhydroxid, einem Alkalimetallcarbonat und einem Alkalimetallbicarbonat, um die Polymerperlen zu erhalten;
und wobei das Porogen Toluol ist.

2. Verfahren nach Anspruch 1, wobei das funktionelle Acetoacetoxy- oder Acetoacetamidmonomer aus der Gruppe ausgewählt wird bestehend aus Acetoacetoxyethylmethacrylat, Acetoacetoxyethylacrylat, Acetoacetoxypropylmethacrylat, Allylacetoacetat, Acetoacetoxybutylmethacrylat und 2,3-Di(acetoacetoxy)proplymethacrylat.

3. Verfahren nach Anspruch 1, wobei das Polyvinylmonomer ein aromatisches Polyvinylmonomer umfasst, ausgewählt aus der Gruppe bestehend aus Divinylbenzol, Trivinylbenzol und Divinylnaphthalin.

4. Verfahren nach Anspruch 1, wobei das Polymer, auf das Gewicht des Polymers bezogen, 30 bis 70 Gew.-% strukturelle Einheiten des funktionellen Acetoacetoxy- oder Acetoacetamidmonomers, 30 bis 70 Gew.-% strukturelle Einheiten des Polyvinylmonomers und 0 bis 20 Gew.-% strukturelle Einheiten eines aliphatischen Monovinylmonomers und/oder eines aromatischen Monovinylmonomers umfasst.

5. Gasfiltervorrichtung umfassend Polymerperlen, die durch ein Verfahren nach einem der Ansprüche 1-4 als Filtermedium hergestellt werden.

6. Verfahren zum Entfernen von Aldehyden aus Aldehyde enthaltender Luft, umfassend Kontaktieren der Luft mit Polymerperlen, die durch ein Verfahren nach einem der Ansprüche 1-4 hergestellt werden.

## Revendications

1. Procédé de préparation de billes polymères comprenant un polymère, dans lequel le polymère comprend, sur la base du poids du polymère,
de 25 % à 75 % en poids d'unités structurales d'un monomère fonctionnel acétoacétoxy ou acétoacétamide, et
de 25 % à 75 % en poids d'unités structurales d'un monomère polyvinylique ; et
dans lequel les perles polymères contiennent au moins 5.000 µg/g d'un ion de métal alcalin, mesuré par plasma à couplage inductif (ICP), et
ont une surface spécifique comprise entre 80 et 400 m²/g déterminée par la méthode d'adsorption d'azote dans laquelle des échantillons séchés et dégazés ont été analysés sur un analyseur de sorption volumétrique automatique,
ledit procédé comprenant,
(i) la polymérisation en suspension de monomères en présence d'un porogène, dans laquelle les monomères comprennent, sur la base du poids total de monomères,
de 25 % à 75 % en poids d'un monomère fonctionnel acétoacétoxy ou acétoacétamide, et
de 25 % à 75 % en poids d'un monomère polyvinylique ; et
(ii) la mise en contact du polymère obtenu à l'étape (i) avec une base choisie dans le groupe constitué d'un hydroxyde de métal alcalin, d'un carbonate de métal alcalin et d'un bicarbonate de métal alcalin pour obtenir les perles polymères ;
et dans lequel le porogène est le toluène.

2. Procédé selon la revendication 1, dans lequel le monomère fonctionnel acétoacétoxy ou acétoacétamide est choisi dans le groupe constitué par le méthacrylate d'acétoacétoxyéthyle, l'acrylate d'acétoacétoxyéthyle, le méthacrylate d'acétoacétoxypropyle, l'acétoacétate d'allyle, le méthacrylate d'acétoacétoxybutyle et le méthacrylate de 2,3-di(acétoacétoxy)propyle.

3. Procédé selon la revendication 1, dans lequel le monomère polyvinylique comprend un monomère polyvinyl aromatique choisi dans le groupe constitué du divinylbenzène, du trivinylbenzène et du divinylnaphtalène.

4. Procédé selon la revendication 1, dans lequel le polymère comprend, par rapport au poids du polymère, de 30 % à 70 % en poids d'unités structurales du monomère fonctionnel acétoacétoxy ou acétoacétamide, de 30 % à 70 % en poids d'unités structurelles du monomère polyvinylique, et de 0 à 20 % en poids d'unités structurelles d'un monomère monovinylique aliphatique et/ou d'un monomère monovinylique aromatique.

5. Dispositif de filtre à gaz comprenant des perles polymères préparées par un procédé selon l'une quelconque des revendications 1 à 4 en tant que milieu filtrant.

6. Procédé d'élimination des aldéhydes de l'air contenant des aldéhydes, comprenant la mise en contact de l'air avec des billes polymères préparées par un procédé selon l'une quelconque des revendications 1-4.
